# EUROPÄISCHE PATENTSCHRIFT

(11) **EP 3 824 726 B1**
(45) Veröffentlichungstag und Bekanntmachung des Hinweises auf die Patenterteilung: **20.09.2023**
(21) Anmeldenummer: 20208742.5
(22) Anmeldetag: 19.11.2020
(51) Int. Cl.: A01K 31/00, A01K 31/17, A01K 31/18, A01K 31/22, A01K 39/014, A01K 31/12

(54) **VORRICHTUNG FÜR DEN AUFENTHALT VON KÜKEN**
DEVICE FOR HOUSING CHICKS
DISPOSITIF DESTINÉ AU SÉJOUR DES POUSSINS

(30) Priorität: 20.11.2019 DE 102019008051
(43) Veröffentlichungstag der Anmeldung: 26.05.2021
(73) Patentinhaber: Fienhage, Hans-Jürgen, 49424 Goldenstedt (DE)
(72) Erfinder: Rensing, Frank, 49429 Visbek (DE)
(74) Vertreter: Heiland, Karsten

(56) Entgegenhaltungen:
- WO-A1-2017/017060
- WO-A1-2020/161315
- DE-A1- 2 102 939
- DE-A1- 2 235 724
- DE-A1- 3 238 244
- DE-T2- 69 809 520
- DE-U1-202005 005 594

## Beschreibung

Die Erfindung betrifft eine Vorrichtung für den Aufenthalt von Küken in der Geflügelaufzucht, mit einem Gitterboden, welcher einen geneigten Bereich aufweist, und mit einem Eierkanal. Daneben betrifft die Erfindung eine Stalleinrichtung und einen Geflügelstall.

In einem Geflügelstall für die Aufzucht von Legehühnern werden die Küken in mehreren übereinander angeordneten Aufzuchtebenen auf Gitterböden gehalten. Unter jedem Gitterboden ist in der Regel ein Kotband angeordnet. Über den Gitterböden sind Getränkespender vorgesehen. Futter wird in einem oben offenen Futtertrog zur Verfügung gestellt. Für die Küken sind Gitterböden mit geringer Maschenweite vorgesehen, damit die Küken nicht durch die Gitterböden auf das Kotband gelangen.

Dem Kükendasein entwachsene Legehühner, die bereits Eier legen, werden ebenfalls in mehreren Ebenen (Legehuhnebenen) auf Gitterböden gehalten. Jede Legehuhnebene ist mit einem Gitterboden, Nestern, einem Eiersammelbereich und einem Eierförderer ausgestattet. Getränkespender, Futtertrog und Kotband sind ebenfalls vorgesehen. Der Gitterboden der Legehuhnebene kann gegenüber dem Gitterboden der Aufzuchtebene eine größere Maschenweite aufweisen.

Nach der Aufzucht der Küken müssen diese aus dem Geflügelstall für die Aufzucht in den Geflügelstall für die Legehühner umgesiedelt werden. Dies ist für das Personal mit einem hohen Aufwand verbunden.

Aus der DE2235724A1 ist ein Käfig mit verstellbarem Boden und zur Bewahrung von Küken oder Legehennen bekannt. Der Boden ist geneigt, mit einer Eiersammelschale seitlich. Dabei ist der Boden aus einem Drahtgeflecht mit einer Mehrzahl sich in Längsrichtung erstreckender Drahtstücke gebildet. Ein dem Eiersammelbereich nächstliegender Teil des Bodens ist schräg aufwärts klappbar, so dass einerseits Küken entlang der derart gebildeten Schräge zu einem Futtertrog über dem Eiersammelbereich gelangen können und andererseits den Küken der Weg zum Eiersammelbereich versperrt ist.

Die WO2017/017060A1 offenbart eine Stalleinrichtung mit umgekehrt-V-förmig geneigten Gitterböden für Küken und Hühner und mit zwei randseitigen Eiersammelbereichen. Ein Boden mit geringer Maschenweite weist einen schräg aufwärts klappbaren Endbereich auf, mit dem ein Spalt verschließbar ist, damit Küken nicht entkommen können.

Die DE2102939A1 offenbart eine Stallvorrichtung für Geflügel zur Eiererzeugung, ohne Hinweis auf Küken. V-förmig angeordnete Böden weisen mittig eine Eiersammelvorrichtung auf, mit einer darüber befindlichen stationären Abdeckung aus Trennwänden, welche darunter einen Spalt zum Durchtritt der Eier freilassen.

Die DE202005005594U1 offenbart eine Kleinvoliere für die Haltung von Jung- und Legehennen. Die Voliere weist einen umgekehrt-V-förmigen Gitterboden auf. Mittig ist ein Legenest vorgesehen.

Die DE69809520T2 offenbart eine Geflügelstallausstattung für Legehennen. Auch die Aufzucht von Küken ist erwähnt. In diesem Fall soll eines der Etagengestelle abschließbar sein. Die Hühner ruhen, fressen und trinken auf Gittern. Legenester sind in Etagen angeordnet und weisen schräg gerichtete Böden auf. Für Küken sind nur horizontale Böden vorgesehen.

Die nachveröffentlichte WO2020/161315A1 offenbart ein Stallungssystem bzw. Volierenhaltungssystem mit einem Aufzuchtbereich für Küken einerseits und einem Produktionsbereich für Junghennen und Legehennen andererseits. Vorgesehen sind drei Etagen mit umgekehrt V-förmig angeordneten Gitterböden und seitlichen Eierbändern. Der Aufzuchtbereich ist durch Absperrmittel vom Produktionsbereich getrennt.

Aufgabe der vorliegenden Erfindung ist die Schaffung einer Vorrichtung, die sowohl für die Aufzucht von Legehühnern (Küken) als auch für das Halten der eierlegenden Legehühner geeignet ist.

Zur Lösung der Aufgabe weist die erfindungsgemäße Vorrichtung die Merkmale des Anspruchs 1 auf. Insbesondere ist ein Gitterboden mit einem geneigten Bereich vorgesehen. Der Gitterboden ist für den Aufenthalt von Küken geeignet, insbesondere auch für weniger als zwei Wochen alte Küken, vorzugsweise auch Ein-Tages-Küken. Die Maschenweite ist darauf abgestimmt. Anders als bisher in der Geflügelaufzucht üblich, weist der für die Aufzucht vorgesehene Gitterboden einen geneigten Bereich auf. Dies ermöglicht dem Geflügelzüchter diesen Bereich auch für Legehühner zuzulassen. Durch den geneigten Gitterboden rollen die gelegten Eier automatisch in einen Bereich, der hier als Eiersammelbereich bezeichnet wird. Von dort können die Eier mit wenig Aufwand entnommen werden. Die Vorrichtung ist demnach sowohl für Küken in der Geflügelaufzucht als auch für die Haltung von Legehühnern geeignet.

Nach einem weiteren Gedanken der Erfindung kann im Anschluss an den geneigten Bereich des Gitterbodens ein Eierförderer vorgesehen sein. Die gelegten Eier rollen auf den Eierförderer und werden direkt abgefördert. Dabei läuft die Förderrichtung vorzugsweise quer zur Neigungsrichtung des Gitterbodens. Insbesondere handelt es sich bei dem Eierförderer um ein an sich bekanntes Eierband.

Nach einem weiteren Gedanken der Erfindung kann der Eierförderer eine lösbare seitliche Abdeckung aufweisen. Die Abdeckung soll vorgesehen und geeignet sein, um zu verhindern, dass Küken auf den Eierförderer gelangen. Erst wenn die Küken größer sind, wird die seitliche Abdeckung soweit angehoben, dass zwar Eier, nicht jedoch die größeren Küken darunter passen.

Erfindungsgemäß weist der Gitterboden mittig einen Eierkanal als tiefsten Bereich auf Der Eierförderer ist im tiefsten Bereich angeordnet. Außerhalb des tiefsten Bereichs ist der Gitterboden V-förmig mit sehr großem Öffnungswinkel ausgebildet, wie beispielsweise in der DE 20 2007 015 498 U1 dargestellt. Auf jeder Seite des tiefsten Bereichs ist ein geneigter Bereich des Gitterbodens vorgesehen, derart, dass die Eier zum tiefsten Bereich hin rollen können.

Erfindungsgemäß ist ein Futtertrog an einem hoch gelegenen äußeren Rand des Gitterbodens vorgesehen. Im Fall eines mittigen Eierkanals sind vorzugsweise Futtertröge an beiden einander gegenüberliegenden Rändern des Gitterbodens vorgesehen.

Nach einem weiteren Gedanken der Erfindung kann an einem äußeren Rand des Gitterbodens oder an einander gegenüberliegenden äußeren Rändern ein Anflugbereich, insbesondere mit Anflugbalkon vorgesehen sein. Der Anflugbalkon ist vorzugsweise verstellbar zwischen einer seitwärts gerichteten, nutzbaren Balkonstellung und einer aufwärts gerichteten Sperrstellung. Dadurch kann das Abwandern von Küken aus diesem Bereich verhindert werden. Je nach Abmessung des Anflugbalkons können weitere Sperreinrichtungen vorgesehen sein.

Nach einem weiteren Gedanken der Erfindung kann die Vorrichtung für den Aufenthalt von Küken in der Geflügelaufzucht, mit einem Gitterboden, einen höhenverstellbaren Futtertrog aufweisen. Dieser ist insbesondere mit Abstand zum äußeren Rand des Gitterbodens angeordnet. Durch die Höhenverstellung kann der Futtertrog mit den Küken mitwachsen. Vorzugsweise beträgt der Abstand mehr als die Breite des langgestreckten Futtertrogs oder mehr als die doppelte Breite desselben.

Nach einem weiteren Gedanken der Erfindung ist der Futtertrog aus einer niedrigen Position auf dem Gitterboden in eine hohe Position mit Abstand zum Gitterboden bewegbar. In der niedrigen Position können auch junge Küken an das Futter im Futtertrog gelangen. Für sehr junge Küken kann der Futtertrog seitliche Futterauslauflöcher aufweisen. Unterhalb der Futterauslauflöcher können auf dem Gitterboden futterundurchlässige Unterlagen vorgesehen sein, die vorzugsweise abnehmbar sind. Nach einem weiteren Gedanken der Erfindung kann eine stationäre oder verstellbare Sitzstange oberhalb des höhenverstellbaren Futtertrogs vorgesehen sein. Insbesondere ist die Sitzstange höhenverstellbar.

Nach einem weiteren Gedanken der Erfindung kann die Vorrichtung für den Aufenthalt von Küken in der Geflügelaufzucht auf dem Gitterboden eine Trennwand aufweisen. Mit der Trennwand ist eine zeitweise Verkleinerung des für die Küken vorgesehenen Bereichs möglich. Insbesondere soll mit der Trennwand der Aufenthaltsbereich der Küken nahe den Rändern des Gitterbodens gewährleistet sein. Die Küken sind dadurch für das Personal leichter erreichbar, etwa für Impfungen.

Nach einem weiteren Gedanken der Erfindung kann die Trennwand verstellbar, nach oben anhebbar oder verkleinerbar sein. Vorzugsweise ist die Trennwand aufwickelbar auf eine obere Wickelwelle. Dies ermöglicht eine zentrale Steuerung der Trennwandverstellung.

Nach einem weiteren Gedanken der Erfindung können Tränke und Futtertrog auf einer Seite der Trennwand und zumindest ein Futtertrog auf der anderen Seite der Trennwand vorgesehen sein. Bei aktiver Trennwand werden nur Tränke und Futtertrog auf der einen Seite genutzt, während der Futtertrog auf der anderen Seite unbenutzt bleibt und nicht befüllt und/oder gesäubert werden muss.

Nach einem weiteren Gedanken der Erfindung kann wenigstens einer der Futtertröge Futterauslauflöcher aufweisen. Vorzugsweise handelt es sich um einen Futtertrog auf dem Gitterboden nahe einem Anflugbalkon.

Nach einem weiteren Gedanken der Erfindung können ein Anflugbereich, insbesondere mit einem Anflugbalkon, auf einer Seite der Trennwand und ein Eiersammelbereich auf der anderen Seite der Trennwand vorgesehen sein. Der Eiersammelbereich ist vorzugsweise mit einem Eierförderer versehen.

Vorteilhafterweise kann der Anflugbalkon verstellbar sein zwischen einer seitwärts gerichteten, nutzbaren Balkonstellung und einer aufwärts gerichteten Sperrstellung. Die Verstellung kann vorzugsweise durch Schwenken oder Anklappen erfolgen. Insbesondere dient der angeklappte Anflugbalkon als Seitenwand zur Begrenzung des Raumes für die Küken.

Nach einem weiteren Gedanken der Erfindung können Anflugbereich, verstellbare Trennwand und Eiersammelbereich vorgesehen sein, wobei ein höhenverstellbarer Futtertrog insbesondere ausschließlich zwischen Trennwand und Anflugbereich vorgesehen ist. Der Futtertrog ist so dimensioniert, dass er für die Haltung von Legehennen ausreicht. Durch die Höhenverstellung kann der Futtertrog auch von sehr jungen Küken genutzt werden. Vorzugsweise kann der Futtertrog dann Futterauslauflöcher seitlich aufweisen. Die Höhe des Futters im Futtertrog (das Futterniveau) wird an die Höhe der Futterauslauflöcher angepasst. Sofern die Futterauslauflöcher genutzt werden sollen, wird das Futterniveau im Futtertrog hochgehalten, anderenfalls niedriger. Zwischen Trennwand und Eiersammelbereich ist vorzugsweise kein Futtertrog vorgesehen. Dies vereinfacht die Wartung der Futtertröge insgesamt.

Eine Stalleinrichtung für die Volierenhaltung weist mehrere Aufenthaltsebenen auf, wobei wenigstens eine Aufenthaltsebene eine Aufzuchtebene ist und wenigstens eine Aufenthaltsebene eine Legehuhnebene ist. Dies ermöglicht das Halten von Legehühnern in einer Stalleinrichtung bereits als Küken. Sobald die Küken zu Legehühnern geworden sind, werden sie in die Legehuhnebene verlagert oder gelangen selbst dorthin.

Nach einem weiteren Gedanken der Erfindung kann die Stalleinrichtung eine Vorrichtung nach einem der Ansprüche 1 bis 15 in der Aufzuchtebene aufweisen. Die derart gestaltete Aufzuchtebene kann dann zugleich Aufenthaltsebene für die Legehühner bzw. Legehuhnebene sein.

Ein erfindungsgemäßer Geflügelstall, insbesondere für die Aufzucht von Legehühnern, kann eine Vorrichtung nach einem der Ansprüche 1 bis 15 oder eine Stalleinrichtung nach Anspruch 16 aufweisen.

Weitere Merkmale der Erfindung ergeben sich aus der Beschreibung im Übrigen und aus den Ansprüchen. Vorteilhafte Ausführungseispiele der Erfindung werden nachfolgend anhand von Zeichnungen näher erläutert. Es zeigen:
- Fig. 1: eine isometrische Darstellung eines Teils einer Stalleinrichtung,
- Fig. 2: die Stalleinrichtung gemäß Fig. 1 in einer Frontansicht,
- Fig. 3: die Stalleinrichtung gemäß Fig. 1 ohne die beiden oberen Ebenen, also nur mit Darstellung von zwei Ebenen,

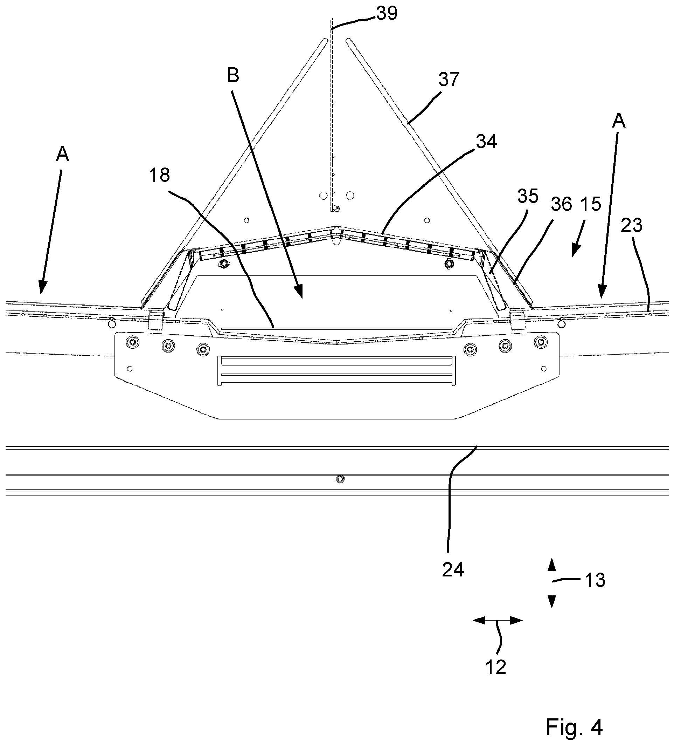

- Fig. 4: einen Ausschnitt aus Fig. 2, nämlich einen mittigen Eierkanal mit Eierförderer,
- Fig. 5: einen weiteren Ausschnitt aus Fig. 2, nämlich einen randseitigen Bereich zwischen Eierkanal und Anflugbalkon,
- Fig. 6: eine Darstellung analog Fig. 5 für eine weitere Ausführungsform,
- Fig. 7: eine Darstellung analog Fig. 5 für eine weitere Ausführungsform.

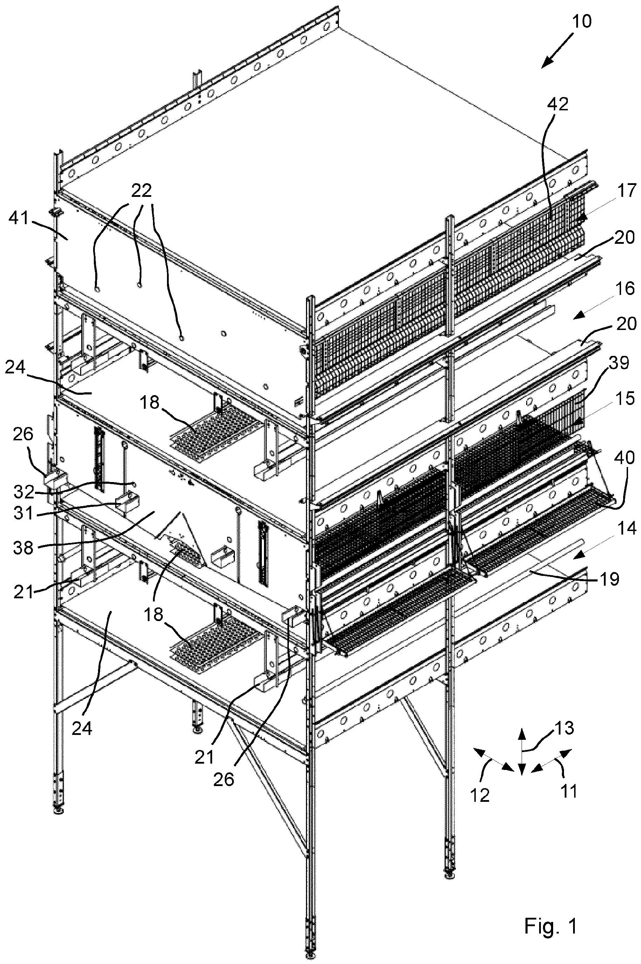

Eine Stalleinrichtung 10 ist vorgesehen für den Aufenthalt von Küken in der Geflügelaufzucht und zugleich für den Aufenthalt von Legehühnern. Die Stalleinrichtung 10 ist in Fig. 1 abgeschnitten dargestellt. Tatsächlich erstreckt sich die Stalleinrichtung 10 in Längsrichtung gemäß Doppelpfeil 11 wesentlich weiter als dargestellt, während für die Einrichtung in Querrichtung gemäß Doppelpfeil 12 die tatsächlichen Dimensionen beispielhaft dargestellt sind.

In Hochrichtung gemäß Doppelpfeil 13 sind vier Aufenthaltsebenen übereinander vorgesehen, nämlich von unten nach oben eine Legehuhnebene 14, eine Aufzuchtebene 15, eine Legehuhnebene 16 und eine Zusatzebene 17 ganz oben.

Die Aufzuchtebene 15 ist derart ausgebildet und ausgestattet, dass ein Aufenthalt von Küken möglich ist. Insbesondere sollen sich auch junge Küken in der Aufzuchtebene 15 aufhalten können, also einschließlich der sogenannten Ein-Tages-Küken. Zusätzlich soll der Aufenthalt von ausgewachsenen Legehühnern in der Aufzuchtebene 15 möglich sein. Die Legehuhnebenen 14, 16 sind nur für Legehühner vorgesehen und entsprechend ausgebildet. Die Zusatzebene 17 kann als zusätzliche Aufenthaltsebene für die Legehühner ausgebildet sein, vorzugsweise mit geringerer Ausstattung als die Legehuhnebenen 14, 16.

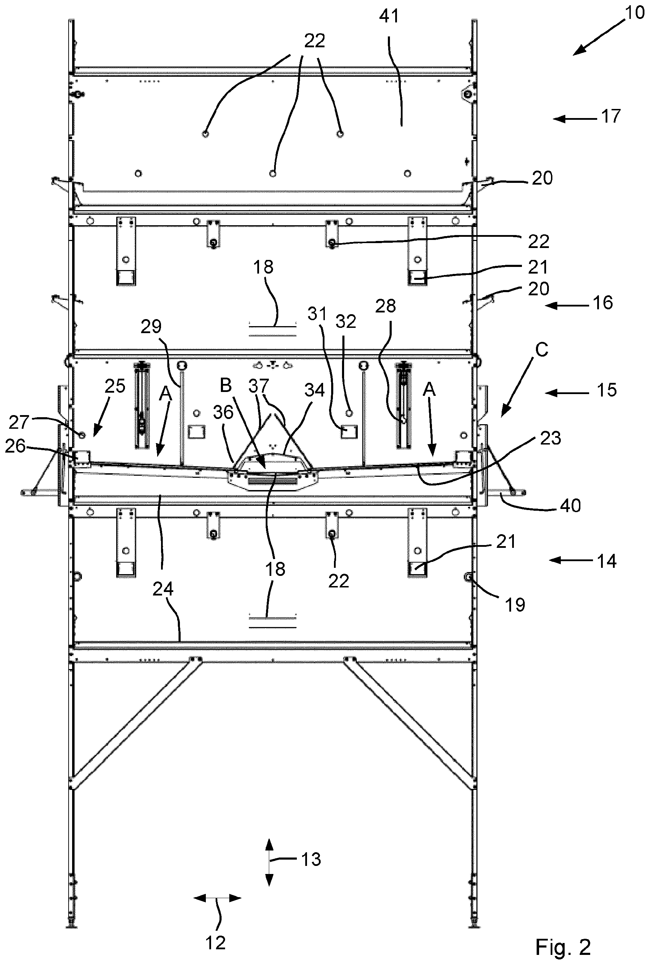

In jeder der Aufenthaltsebenen 14 bis 17 sind in bekannter Weise Gitterböden und Kotbänder vorgesehen, nicht jedoch überall eingezeichnet. Die Legehuhnebenen 16 sind in an sich bekannter Weise gestaltet. In Fig. 2 sind ein Eierförderer 18 im Bereich eines mittigen Eierkanals B und in Form eines Eierbandes, seitliche Anflugstangen 19 (Legehuhnebene 14), Anflugplanken 20 (Legehuhnebene 16), hoch gehängte Futtertröge 21 und hoch angeordnete Getränkelinien 28 dargestellt. Nicht ersichtlich aber gleichwohl vorhanden sind Gitterböden und Nester und ggf. weitere Einrichtungsteile.

In der Zusatzebene 17 sind nur Sitzstangen 22 auf unterschiedlichen Höhen und die Anflugplanken 20 dargestellt. Vorzugsweise sind auch Gitterböden und Kotbänder vorhanden. Insbesondere nicht vorgesehen sind Futtertröge, Getränkelinien und Eierförderer.

Die Ausgestaltung der Legehuhnebenen 14, 16 mit geneigtem Gitterboden, mittigem Eierförderer und Nestern ist beispielhaft in der DE 20 2007 015 498 U1 des Anmelders gezeigt. Die dort angegebenen Merkmale können auch hier im Bereich der Legehuhnebenen vorgesehen sein. Die maximale Maschenweite (Innenweite) der Gitterböden 23 in den Legehuhnebenen 14, 16 beträgt vorzugsweise bis zu 50 mm. Insbesondere ist ein rechteckiger Maschenquerschnitt vorgesehen mit Maschenweiten von 20 bis 25mm in einer Richtung und 40 bis 50mm in anderer Richtung, also beispielsweise etwa 22mm x 47mm.

Die Aufzuchtebene 15 weist einen von außen nach innen V-förmig geneigten Gitterboden 23 mit sehr großem Öffnungswinkel sowie einen mittigen Eierförderer 18 auf, ebenfalls wie in der DE 20 2007 015 498 U1 dargestellt. Geneigte Bereiche A des Gitterbodens 23 erstrecken sich bis an den Eierkanal B.

Von besonderer Bedeutung ist die Maschenweite des Gitterbodens 23. Damit die jungen Küken auf dem Gitterboden 23 sitzen können, ohne auf das darunterliegende Kotband 24 zu gelangen, ist die Maschenweite relativ klein, jedenfalls deutlich kleiner als dies für ausgewachsene Legehühner üblich ist. Bevorzugt wird eine maximale Maschenweite (Innenweite) von etwa 18 bis 24 mm, insbesondere etwa 22 mm, bei vorzugsweise quadratischem Maschenquerschnitt, also beispielsweise etwa 22mm x 22mm.

Die Aufzuchtebene 15 weist an in Querrichtung (Doppelpfeil 12) äußeren Rändern 25 Futtertröge 26 auf, die sich in der üblichen Weise in Längsrichtung (Doppelpfeil 11) erstrecken und die auf dem Gitterboden 23 angeordnet sind. Oberhalb der Futtertröge 26 sind mit geringem Abstand Sitzstangen 27 vorgesehen.

Mit Abstand zu den äußeren Rändern 25, also einwärts der Futtertröge 26 sind höhenverstellbare Getränkelinien 28 angeordnet. Die Höhe der Getränkelinien 28 kann so mit der Größe der Küken mitwachsen.

Zwischen Getränkelinien 28 und Eierförderer 18 sind aufrechte, verstellbare Trennwände 29 vorgesehen. Vorzugsweise sind die Trennwände 29 auf obere Wickelwellen 30 aufwickelbar. Vorgesehen ist, dass sich die Küken in den ersten Tagen ihres Lebens im Bereich zwischen den äußeren Rändern 25 und den herabgelassenen Trennwänden 29 aufhalten. Nach einigen Tagen oder Wochen werden die Trennwände 29 angehoben bzw. aufgewickelt, sodass den Küken mehr Raum zur Verfügung steht.

Zwischen Trennwänden 29 und Eierförderer 18 sind ebenfalls Futtertröge 31 mit darüber angeordneten Sitzstangen 32 vorgesehen. Die Futtertröge 31 und/oder die Sitzstangen 32 sind höhenverstellbar. Junge Küken benötigen die Futtertröge 31 auf dem Gitterboden 23, während ältere Küken das Futter auch aus höheren Futtertrögen aufnehmen können. Die Sitzstangen 32 werden ohnehin erst von älteren Küken benutzt.

In den Futtertrögen 21, 26, 31 sind nicht gezeigte Futterförderer bzw. Futterketten vorgesehen, sodass Futter automatisiert zuführbar ist. Insbesondere die im Bereich der äußeren Ränder 25 der Aufzuchtebene 15 vorgesehenen Futtertröge 26 können in einer zum Eierförderer 18 gerichteten, inneren Seitenwand 33 nicht gezeigte Futterauslauflöcher aufweisen. Unterhalb der Futterauslauflöcher sind dann vorzugsweise futterdichte Unterlagen platziert, auf denen sich kleine Futterhaufen sammeln und von den jungen Küken als Futterquelle genutzt werden.

In der Aufzuchtebene 15 ist der Eierförderer 18 mit einer oberen Abdeckung 34 versehen, damit Tiere nicht auf den Eierförderer 18 oder an die Eier gelangen können. An die Abdeckung 34 seitlich anschließende Bereiche 35 sind frei, um einen Durchtritt der Eier vom Gitterboden 23 auf den Eierförderer 18 zu ermöglichen.

Damit junge Küken nicht auf den Eierförderer 18 gelangen können, ist der offene Bereich 35 durch eine Sperrwand 36 absperrbar. Die Sperrwand 36 reicht bis zum Gitterboden 23 hinab und ist in umgekehrt V-förmigen Führungen 37 höhenverstellbar. Die Führungen 37 können in quergerichteten Seitenwänden 38 angeordnet sein, siehe insbesondere Fig. 1.

Durch die quergerichteten Seitenwände 38 können in der Aufzuchtebene 15 geschlossene Abteilungen für die Küken gebildet werden. Unterstützt wird dies durch entlang der äußeren Ränder 25 angeordnete, aufrechte Wände, die hier als Sperrgitter 39 vorgesehen sind und sich von der darüber liegenden Ebene vorzugsweise bis etwa zu den Sitzstangen 27 erstrecken.

Der Bereich unter den Sperrgittern 39 ist verschließbar durch Anflugbalkone 40, die klappbar sind aus der in Fig. 1 gezeigten, seitwärts gerichteten Balkonstellung in eine aufwärtsgerichtete Sperrstellung (nicht gezeigt). In Sperrstellung versperren die Anflugbalkone 40 den Bereich unterhalb der Sperrgitter 39. Dieser Bereich und/oder der Schwenkbereich der Anflugbalkone 40 kann deshalb als Anflugbereich C bezeichnet werden.

Ebenfalls rundum absperrbar ist auch die Zusatzebene 17. Quergerichtete Seitenwände 41 dienen als Lagerung für Sitzstangen 22. Längsgerichtete Sperrgitter 42 sind abnehmbar oder verstellbar und ermöglichen eine Regelung des Zugangs zur Zusatzebene 17. Schließlich ist die Zusatzebene 17 auch nach oben hin abgedeckt durch eine Dachplatte 45.

Die Aufzuchtebene 15 soll hier zugleich als Aufenthaltsebene für ausgewachsene Legehühner dienen. Nachdem die Küken eine angemessene Größe erreicht haben, können zunächst die Trennwände 29 entfernt bzw. aufgewickelt werden. Zugleich oder nach weiterem Wachstum der Küken werden die Sperrwände 36 vor den offenen Bereichen 35 des Eierförderers 18 entfernt bzw. angehoben. Die Legehühner können sich dann im gesamten Bereich der Aufzuchtebene 15 aufhalten und auch Eier legen. Letztere rollen auf den Eierförderer 18 und werden in Längsrichtung abgefördert.

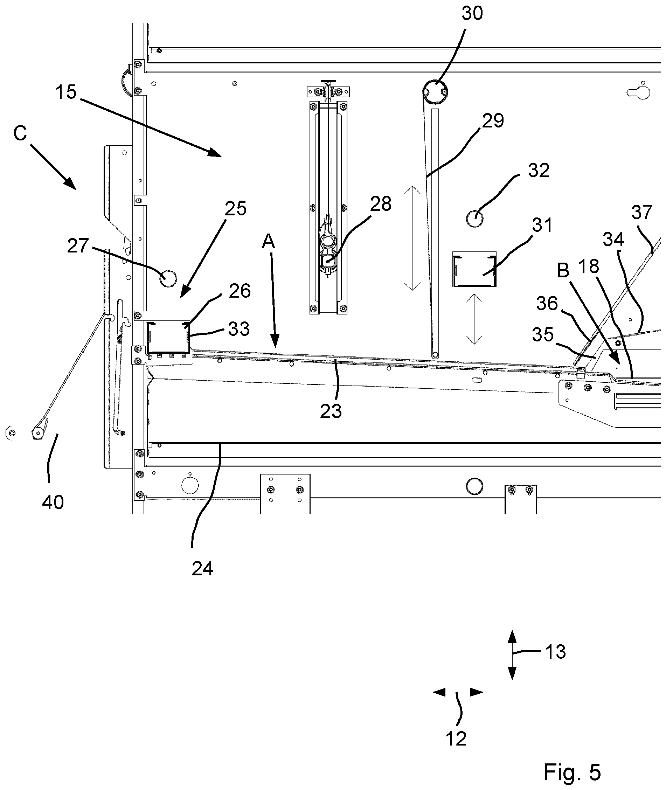

Für die konkrete Ausgestaltung der Aufzuchtebene 15 mit Futtertrögen und anderen Einrichtungsdetails sind unterschiedliche Varianten vorstellbar. So können die Futtertröge 31 unterhalb der Sitzstangen 32 im Gegensatz zur Darstellung in Fig. 5 auch stationär angeordnet und beispielsweise in den quergerichteten Seitenwänden 38 gehalten sein, wie dies in Fig. 1 gezeigt ist.

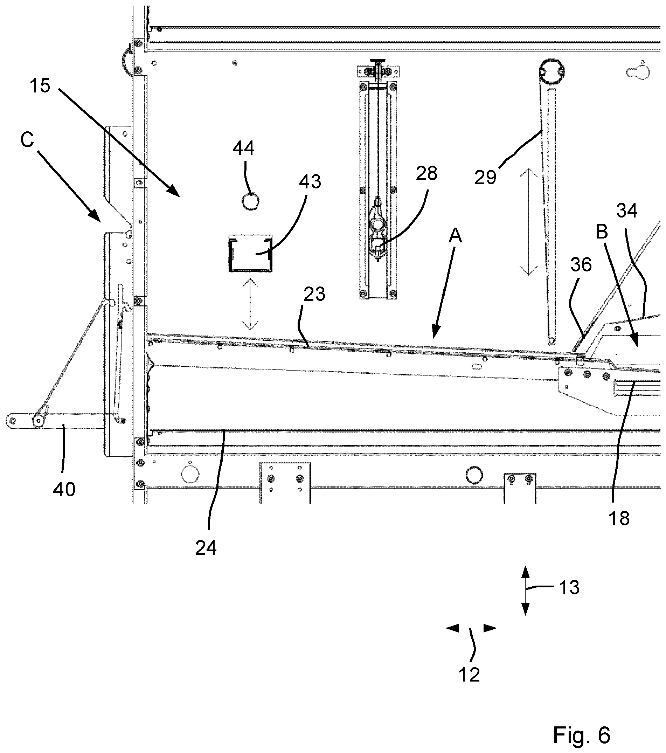

Eine besondere Variante zeigt Fig. 6. Hier sind nur Futtertröge 43 zwischen den Trennwänden 29 und den äußeren Rändern 25 vorgesehen, vorzugsweise zwischen den Getränkelinien 28 und den äußeren Rändern 25. Die Trennwände 29 können dicht an den Sperrwänden 36 oder näher an den Getränkelinien 28 angeordnet sein. Alternativ können Trennwände 29 oder Sperrwände 36 entfallen. Futtertröge 43 und/oder Sitzstangen 44 sind in der Ausführung gemäß Fig. 6 höhenverstellbar, analog zu Futtertrögen 31 und Sitzstangen 32 in Fig. 5.

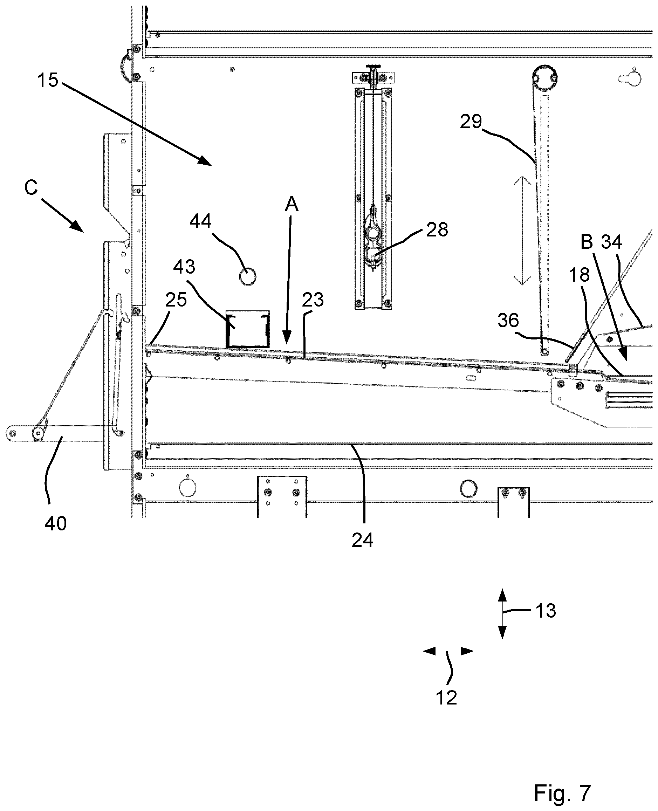

Fig. 7 zeigt eine Abwandlung der Ausführungsform gemäß Fig. 6. In Fig. 7 sind Futtertröge 43 und Sitzstangen 44 stationär angeordnet, die Futtertröge 43 unmittelbar auf dem Gitterboden 23, die Sitzstangen 44 darüber.

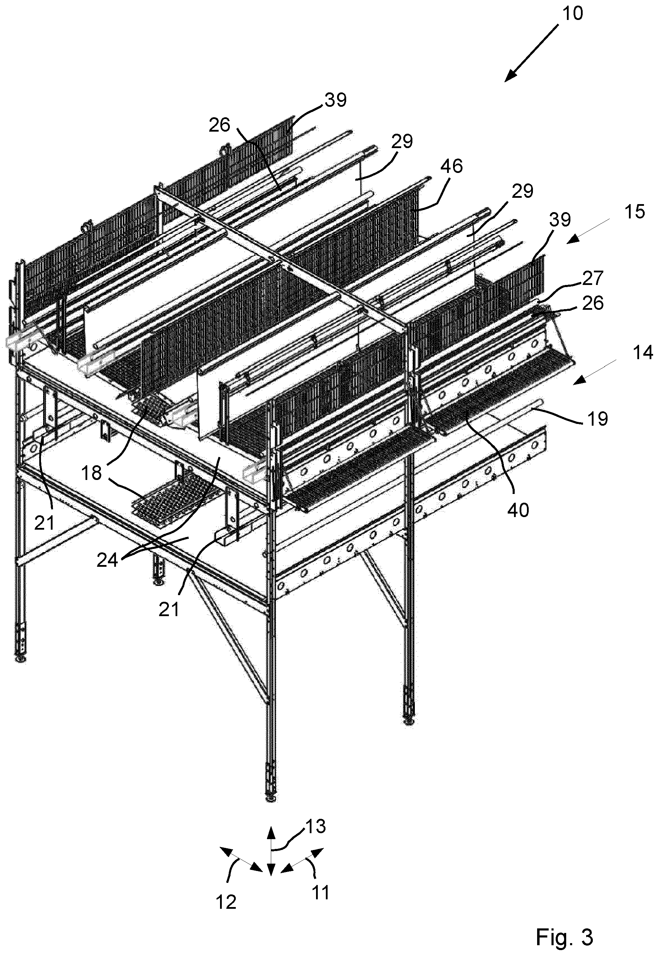

Gemäß Fig. 3 kann auch mittig über dem Eierförderer 18 ein aufrechtes Sperrgitter 46 vorgesehen sein.

Mit der anhand mehrerer Ausführungsformen dargestellten Stalleinrichtung 10 können Küken und Legehühner in einer Einrichtung gehalten werden. Die ansonsten nur für Küken vorgesehene Aufzuchtebene 15 ist zugleich auch für den Aufenthalt von Legehühnern geeignet und vorgesehen.

**Bezugszeichenliste:**

| | | | |
|---|---|---|---|
| 10 | Stalleinrichtung | 36 | Sperrwände |
| 11 | Doppelpfeil (Längsrichtung) | 37 | Führungen |
| 12 | Doppelpfeil (Querrichtung) | 38 | quergerichtete Seitenwände |
| 13 | Doppelpfeil (Hochrichtung) | 39 | Sperrgitter |
| 14 | Legehuhnebene | 40 | Anflugbalkone |
| 15 | Aufzuchtebene | 41 | quergerichtete Seitenwände |
| 16 | Legehuhnebene | 42 | Sperrgitter |
| 17 | Zusatzebene | 43 | Futtertröge |
| 18 | Eierförderer | 44 | Sitzstangen |
| 19 | Anflugstange | 45 | Dachplatte |
| 20 | Anflugplanken | 46 | Sperrgitter |
| 21 | Futtertröge (Legehuhnebenen) | | |
| 22 | Sitzstangen (Zusatzebene) | | |
| 23 | Gitterboden | A | geneigter Bereich |
| 24 | Kotband | B | Eierkanal |
| 25 | äußere Ränder | C | Anflugbereich |
| 26 | Futtertröge (Aufzuchtebene) | | |
| 27 | Sitzstangen (Aufzuchtebene) | | |
| 28 | Getränkelinien | | |
| 29 | Trennwände | | |
| 30 | Wickelwellen | | |
| 31 | Futtertröge | | |
| 32 | Sitzstangen | | |
| 33 | innere Seitenwand | | |
| 34 | obere Abdeckung | | |
| 35 | offener Bereich | | |

## Patentansprüche

1. Vorrichtung für den Aufenthalt von Küken in der Geflügelaufzucht, mit einem Gitterboden (23) mit geneigtem Bereich (A) und mit einem Eierkanal (B), wobei ein Futtertrog (26) an einem hoch gelegenen äußeren Rand (25) des Gitterbodens (23) vorgesehen ist, **dadurch gekennzeichnet, dass** der Gitterboden (23) den Eierkanal (B) mittig als tiefsten Bereich aufweist.

2. Vorrichtung nach Anspruch 1, **gekennzeichnet durch** einen Eierförderer (18) im Anschluss an den geneigten Bereich (A) des Gitterbodens (23).

3. Vorrichtung nach Anspruch 2, **gekennzeichnet durch** eine lösbare seitliche Abdeckung (36) des Eierförderers (18).

4. Vorrichtung nach einem der Ansprüche 1 bis 3, **gekennzeichnet durch** eine obere Abdeckung (34) des Eierförderers (18).

5. Vorrichtung nach einem der Ansprüche 1 bis 4, **dadurch gekennzeichnet, dass** an einem äußeren Rand (25) des Gitterbodens (23) ein Anflugbereich (C) vorgesehen ist.

6. Vorrichtung nach einem der Ansprüche 1 bis 4, **dadurch gekennzeichnet, dass** an einander gegenüberliegenden Rändern (25) des Gitterbodens (23) ein Anflugbereich (C) vorgesehen ist

7. Vorrichtung nach einem der Ansprüche 1 bis 6, **gekennzeichnet durch** einen höhenverstellbaren Futtertrog (31, 43).

8. Vorrichtung nach Anspruch 7, **dadurch gekennzeichnet, dass** der Futtertrog (31, 43) aus einer niedrigen Position auf dem Gitterboden (23) in eine hohe Position mit Abstand zum Gitterboden (23) bewegbar ist.

9. Vorrichtung nach Anspruch 7 oder 8, **gekennzeichnet durch** eine stationäre oder verstellbare Sitzstange (32, 44) oberhalb des Futtertrogs (31, 43).

10. Vorrichtung nach einem der Ansprüche 1 bis 9, **gekennzeichnet durch** eine Trennwand (29) auf dem Gitterboden (23) oder oberhalb des Gitterbodens (23).

11. Vorrichtung nach Anspruch 10, **dadurch gekennzeichnet, dass** die Trennwand (29) verstellbar, nach oben anhebbar oder verkleinerbar ist.

12. Vorrichtung nach Anspruch 10 oder 11, **gekennzeichnet durch** Tränke und Futtertrog (26) auf einer Seite der Trennwand (29) und zumindest Futtertrog (31) auf der anderen Seite der Trennwand (29).

13. Vorrichtung nach Anspruch 12, **dadurch gekennzeichnet, dass** wenigstens einer der Futtertröge (26) Futterauslauflöcher aufweist.

14. Vorrichtung nach einem der Ansprüche 10 bis 13, **gekennzeichnet durch** einen Anflugbereich auf einer Seite der Trennwand (29) und einen Eiersammelbereich (B) auf der anderen Seite der Trennwand (29).

15. Vorrichtung nach einem der Ansprüche 10 bis 14, **gekennzeichnet durch** Anflugbereich (C), verstellbare Trennwand (29) und Eiersammelbereich (B), wobei ein höhenverstellbarer Futtertrog (43) zwischen Trennwand (29) und Anflugbereich (C) vorgesehen ist.

16. Stalleinrichtung (10) für die Volierenhaltung, mit mehreren Aufenthaltsebenen (14, 15, 16, 17), wobei wenigstens eine Aufenthaltsebene Aufzuchtebene (15) ist und wenigstens eine Aufenthaltsebene Legehuhnebene (16) ist, mit einer Vorrichtung nach einem der Ansprüche 1 bis 15 in der Aufzuchtebene (15).

17. Geflügelstall, **gekennzeichnet durch** eine Vorrichtung nach einem der Ansprüche 1 bis 15 oder eine Stalleinrichtung (10) nach Anspruch 16.

## Claims

1. A device for accommodating chicks in poultry rearing, having a grid floor (23) with sloping region (A) and with an egg channel (B), wherein a feed trough (26) is provided on an elevated outer edge (25) of the grid floor (23), **characterized in that** the grid floor (23) has the egg channel (B) in the centre as the deepest region.

2. The device as claimed in claim 1, **characterized by** an egg conveyor (18) following the sloping region (A) of the grid floor (23).

3. The device as claimed in claim 2, **characterized by** a removable lateral cover (36) of the egg conveyor (18).

4. The device as claimed in one of claims 1 to 3, **characterized by** an upper cover (34) of the egg conveyor (18).

5. The device as claimed in one of claims 1 to 4, **characterized in that** an approach region (C) is provided at an outer edge (25) of the grid floor (23).

6. The device as claimed in one of claims 1 to 4, **characterized in that** an approach region (C) is provided at mutually opposite edges (25) of the grid floor (23).

7. The device as claimed in one of claims 1 to 6, **characterized by** a vertically adjustable feed trough (31, 43).

8. The device as claimed in claim 7, **characterized in that** the feed trough (31, 43) is movable from a low position on the grid floor (23) into a high position at a distance from the grid floor (23).

9. The device as claimed in claim 7 or 8, **characterized by** a stationary or adjustable sitting perch (32, 44) above the feed trough (31, 43).

10. The device as claimed in one of claims 1 to 9, **characterized by** a dividing wall (29) on the grid floor (23) or above the grid floor (23).

11. The device as claimed in claim 10, **characterized in that** the dividing wall (29) is adjustable, capable of being raised upwards or capable of being made smaller.

12. The device as claimed in claim 10 or 11, **characterized by** drinking station and feed trough (26) on one side of the dividing wall (29) and at least feed trough (31) on the other side of the dividing wall (29).

13. The device as claimed in claim 12, **characterized in that** at least one of the feed troughs (26) has feed outlet holes.

14. The device as claimed in one of claims 10 to 13, **characterized by** an approach region on one side of the dividing wall (29) and an egg collecting region (B) on the other side of the dividing wall (29).

15. The device as claimed in one of claims 10 to 14, **characterized by** approach region (C), adjustable dividing wall (29) and egg collecting region (B), wherein a vertically adjustable feed trough (43) is provided between dividing wall (29) and approach region (C).

16. A housing arrangement (10) for husbandry in an aviary, having a plurality of accommodation levels (14, 15, 16, 17), wherein at least one accommodation level is rearing level (15) and at least one accommodation level is laying hen level (16), with a device as claimed in one of claims 1 to 15 in the rearing level (15).

17. A poultry house, **characterized by** a device as claimed in one of claims 1 to 15 or a housing arrangement (10) as claimed in claim 16.

## Revendications

1. Dispositif pour le séjour de poussins dans l'élevage de volailles, avec un plancher grillagé (23) avec une zone inclinée (A) et avec un canal à oeufs (B), une mangeoire (26) étant prévue sur un bord extérieur élevé (25) du plancher grillagé (23), **caractérisé en ce que** le fond grillagé (23) présente le canal à oeufs (B) au centre en tant que zone la plus basse.

2. Dispositif selon la revendication 1, **caractérisé par** un convoyeur d'œufs (18) à la suite de la zone inclinée (A) du fond grillagé (23).

3. Dispositif selon la revendication 2, **caractérisé par** un couvercle latéral amovible (36) du convoyeur d'œufs (18) .

4. Dispositif selon l'une quelconque des revendications 1 à 3, **caractérisé par** un couvercle supérieur (34) du convoyeur d'œufs (18).

5. Dispositif selon l'une quelconque des revendications 1 à 4, **caractérisé en ce qu'**une zone d'approche (C) est prévue sur un bord extérieur (25) du fond grillagé (23).

6. Dispositif selon l'une quelconque des revendications 1 à 4, **caractérisé en ce qu'**une zone d'approche (C) est prévue sur des bords opposés l'un à l'autre (25) du plancher grillagé (23).

7. Dispositif selon l'une quelconque des revendications 1 à 6, **caractérisé par** une mangeoire (31, 43) réglable en hauteur.

8. Dispositif selon la revendication 7, **caractérisé en ce que** la mangeoire (31, 43) peut être déplacée d'une position basse sur le fond grillagé (23) à une position haute à distance du fond grillagé (23).

9. Dispositif selon la revendication 7 ou 8, **caractérisé par** un perchoir stationnaire ou réglable (32, 44) au-dessus de la mangeoire (31, 43).

10. Dispositif selon l'une quelconque des revendications 1 à 9, **caractérisé par** une paroi de séparation (29) sur le fond grillagé (23) ou au-dessus du fond grillagé (23) .

11. Dispositif selon la revendication 10, **caractérisé en ce que** la paroi de séparation (29) est réglable, relevable vers le haut ou réductible.

12. Dispositif selon la revendication 10 ou 11, **caractérisé par** un abreuvoir et une mangeoire (26) d'un côté de la paroi de séparation (29) et au moins une mangeoire (31) de l'autre côté de la paroi de séparation (29) .

13. Dispositif selon la revendication 12, **caractérisé en ce qu'**au moins l'une des mangeoires (26) présente des trous de sortie de nourriture.

14. Dispositif selon l'une quelconque des revendications 10 à 13, **caractérisé par** une zone d'approche d'un côté de la paroi de séparation (29) et une zone de collecte d'œufs (B) de l'autre côté de la paroi de séparation (29).

15. Dispositif selon l'une quelconque des revendications 10 à 14, **caractérisé par** une zone d'approche (C), une paroi de séparation réglable (29) et une zone de collecte d'œufs (B), une mangeoire (43) réglable en hauteur étant prévue entre la paroi de séparation (29) et la zone d'approche (C).

16. Installation de poulailler (10) pour l'élevage en volière, avec plusieurs niveaux de séjour (14, 15, 16, 17), au moins un niveau de séjour étant un niveau d'élevage (15) et au moins un niveau de séjour étant un niveau de poules pondeuses (16), avec un dispositif selon l'une quelconque des revendications 1 à 15 dans le niveau d'élevage (15).

17. Poulailler, **caractérisé par** un dispositif selon l'une quelconque des revendications 1 à 15 ou par une installation de poulailler (10) selon la revendication 16.
